(19) 

Europäisches
Patentamt
European
Patent Office
Office européen
des brevets

(11)  **EP 4 507 365 A1**

(12)  **EUROPEAN PATENT APPLICATION**
published in accordance with Art. 153(4) EPC

(43) Date of publication:
**12.02.2025 Bulletin 2025/07**

(21) Application number: **23795319.5**

(22) Date of filing: **24.04.2023**

(51) International Patent Classification (IPC):
**H04W 24/02** (2009.01)

(52) Cooperative Patent Classification (CPC):
**H04W 24/02; H04W 72/542**

(86) International application number:
**PCT/CN2023/090230**

(87) International publication number:
**WO 2023/207886 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022  CN 202210467500**

(71) Applicant: **Huawei Technologies Co., Ltd.
Shenzhen, Guangdong 518129 (CN)**

(72) Inventors:
• **LI, Nijun
   Shenzhen, Guangdong 518129 (CN)**

• **WU, Kedi
   Shenzhen, Guangdong 518129 (CN)**
• **WU, Jian
   Shenzhen, Guangdong 518129 (CN)**
• **WEI, Yuejun
   Shenzhen, Guangdong 518129 (CN)**
• **LI, Leting
   Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54)  **TARGET SERVICE MANAGEMENT METHOD, CORRESPONDING DEVICE, AND SYSTEM**

(57)  A target service management method is provided. The method is applicable to services such as a voice call, a video call, video livestreaming, Cloud AR/VR, and tactile Internet. The method includes: An access network device determines key quality indicator KQI information of a target service during transmission of the target service on a target channel, where the KQI information is used for reflecting quality of service of the target service during transmission of the target service on the target channel; and manages, based on the KQI information and a target service quality-of-service requirement corresponding to the KQI information, the target service transmitted on the target channel. In this way, the access network device can manage the target service based on the quality of service of the target service during transmission of the target service on the target channel. This can improve effective utilization of an air interface resource of the access network device in transmitting the target service, and can further increase a capacity of users whose quality of service satisfies a requirement in a system.

Determine key quality indicator KQI information of a target service during transmission of the target service on a target channel — 401

Manage, based on the KQI information and a target service quality-of-service requirement corresponding to the KQI information, the target service transmitted on the target channel — 402

FIG. 4

EP 4 507 365 A1

**Description**

This application claims priority to Chinese Patent Application No. 202210467500.0, filed with the China National Intellectual Property Administration on April 29, 2022 and entitled "TARGET SERVICE MANAGEMENT METHOD, CORRESPONDING DEVICE, AND SYSTEM", which is incorporated herein by reference in its entirety.

**TECHNICAL FIELD**

The application relates to the field of communication technologies, and specifically, to a target service management method, a corresponding device, and a system.

**BACKGROUND**

For some audio and video services, air interfaces of current 5th generation (5th generation, 5G) mobile communication serve all users according to a proportional fair (Proportional Fair, PF) criterion. In this way, although user fairness is ensured to a large extent, for a user with poor channel quality, air interface resources may be consumed and quality of service (Quality of Service, QoS) of a service cannot be ensured, causing a waste of resources.

An augmented reality (augmented reality, AR) service or a virtual reality (virtual reality, VR) service is used as an example. To implement "immersive" experience, the AR service or the VR service has a high transmission requirement on an air interface of an access network device. For example, a typical source rate is 30 MHz to 50 MHz, and it is needed to be ensured that an end-to-end loopback response delay does not exceed 70 ms. A typical delay constraint value of unidirectional air interface transmission is 10 ms, and a frame loss rate is less than 1%. Therefore, requirements of a high-traffic, low-latency, and high-reliability service such as the AR service or the VR service bring great pressure to the air interface of the access network device. A cell with a bandwidth of 100 MHz can ensure that only five to six AR users or VR users can achieve acceptable QoS. In a current service management method, a large quantity of users cannot use a service well. In addition, effective utilization of an air interface resource in transmitting a target service is low.

**SUMMARY**

This application provides a target service management method, to manage a target service based on KQI information that reflects quality of service of the target service transmitted on a target channel, thereby improving effective utilization of an air interface resource in transmitting the target service. This application further provides a corresponding access network device, a computer-readable storage medium, a computer program product, and the like.

A first aspect of this application provides a target service management method, including: An access network device determines key quality indicator (key quality indicator, KQI) information of a target service during transmission of the target service on a target channel, where the KQI information is used for reflecting quality of service of the target service during transmission of the target service on the target channel; and the access network device manages, based on the KQI information and a target service quality-of-service requirement corresponding to the KQI information, the target service transmitted on the target channel.

In this application, the target service may be any service that has a specific requirement on quality of service (quality of service, QoS). For example, the target service may be a streaming media service that has a high requirement on real-time performance and reliability, for example, a voice call, a video call, video livestreaming, augmented reality (augmented reality, AR), virtual reality (virtual reality, VR), or tactile Internet.

In this application, the access network device may be a base station or another form of device that can perform air interface communication with a terminal device.

In this application, the KQI information may include at least one KQI. The at least one KQI may directly reflect the quality of service of the target service during transmission of the target service on the target channel. Alternatively, the KQI information may include a quality-of-service parameter calculated based on one or more KQIs. The quality-of-service parameter may be a quality of service score, and the quality of service score reflects the quality of service of the target service during transmission of the target service on the target channel.

In this application, the target service quality-of-service requirement may be a threshold corresponding to the KQI information. Managing the target service transmitted on the target channel may include: managing whether to continue to transmit the target service on the target channel; and if the target service continues to be transmitted, continuing to schedule the target service to the target channel; or if the target service does not continue to be transmitted, stopping scheduling the target service to the target channel.

It can be learned from the first aspect that, when managing the target service, the access network device references the key quality indicator KQI information of the target service during transmission of the target service on the target channel. The KQI information reflects the quality of service of the target service during transmission of the target service on the target channel. In this way, the access network device can manage the target service based on the quality of service of the target service during transmission of the target service on the target channel. This can improve effective utilization of an air interface resource of the access network device in transmitting the target service.

In a possible implementation of the first aspect, the KQI information includes at least one KQI. The at least one KQI may include at least one of a frame reception rate under a delay constraint, an average frame air interface transmission delay, a frame air interface transmission delay jitter, and a frame arrival time jitter.

Optionally, the frame reception rate under the delay constraint may be a mandatory KQI. The average frame air interface transmission delay, the frame air interface transmission delay jitter, and the frame arrival time jitter may all be optional KQIs. A mandatory KQI and an optional KQI are not limited in this application, and the at least one KQI included in the KQI information may be set based on a requirement.

In a possible implementation of the first aspect, the foregoing step that an access network device determines KQI information of a target service during transmission of the target service on a target channel includes: The access network device determines a plurality of data packets that belong to a same media frame, where the media frame is a video frame or an audio frame; and the access network device determines, based on a transmission parameter of at least one data packet in the plurality of data packets that belong to the same media frame, at least one KQI of the target service during transmission of the target service on the target channel, where the transmission parameter of the at least one data packet indicates time at which the at least one data packet is scheduled and/or time at which the at least one data packet arrives at a buffer.

In this possible implementation, the KQI is a media frame-level parameter. One media frame usually includes a plurality of data packets. Transmission parameters of data packets that belong to a same media frame are key performance indicators (key performance indicators, KPI) of a physical layer. The KQI of the media frame may be determined based on some KPIs of the data packets, to manage the target service.

In a possible implementation of the first aspect, the plurality of data packets that belong to the same media frame have a same frame sequence number.

In a possible implementation of the first aspect, the plurality of data packets that belong to the same media frame are from a same burst.

In a possible implementation of the first aspect, the foregoing step that the access network device manages, based on the KQI information and a target service quality-of-service requirement corresponding to the KQI information, the target service transmitted on the target channel includes: The access network device determines that a first KQI in the at least one KQI does not satisfy a target service quality-of-service requirement corresponding to the first KQI; and the access network device stops transmitting the target service on the target channel.

In this possible implementation, each KQI may have a corresponding threshold. If a KQI does not satisfy a target service quality-of-service requirement corresponding to the KQI, transmission of the target service on the target channel may be stopped. In this way, a waste of air interface resources caused by a user whose channel quality does not satisfy the target service quality-of-service requirement can be reduced, and the air interface resources are allocated to users whose channel quality satisfies the target service quality-of-service requirement. This can improve utilization of the air interface resources, and can further increase a capacity of users whose quality of service satisfies a requirement in a system. In addition, in the solution of this application, whether to admit a user to continue to use the target service is decided based on the KQI. The KQI can better reflect the quality of service of the target service. In comparison with a manner of determining the quality of service of the target service based on a KPI of a physical layer, the KQI-based manner is more accurate, and can avoid misjudgment of quality of service of a service of a user, thereby accurately screening out the user whose quality of service satisfies the requirement.

In a possible implementation of the first aspect, the foregoing step that the access network device manages, based on the KQI information and a target service quality-of-service requirement corresponding to the KQI information, the target service transmitted on the target channel includes: The access network device determines that each KQI in the at least one KQI satisfies a corresponding target service quality-of-service requirement; and the access network device continues to transmit the target service on the target channel.

In this possible implementation, if all the KQIs satisfy target service quality-of-service requirements respectively corresponding to the KQIs, it indicates that quality of service of the transmission channel is good, and the target service may continue to be transmitted on the target channel, thereby ensuring smoothness of using the target service by the user.

In a possible implementation of the first aspect, the KQI information includes a quality-of-service parameter determined based on a second KQI.

In this possible implementation, the quality-of-service parameter may be a quality of service score of the target service.

In a possible implementation of the first aspect, the second KQI includes a stuck ratio (stuck ratio, SR) and a stuck frequency (stuck frequency, SF) of a media stream. The SR is a ratio of a total of stuck duration of the media stream to duration of the media stream, and the SF is a ratio of a total of stuck times of the media stream to the duration of the media stream; and the quality-of-service parameter is a quality of service QoS score obtained based on the SR and the SF.

In this possible implementation, either of the SR and the SF may be understood as one type of KQI. A relationship between the SR, the SF, and the QoS score of the target service transmitted on the target channel may be pre-modeled. In this way, the QoS score of the target service transmitted on the target channel may be calculated based on the SR and the SF, so that the target service can be managed based on the QoS score.

In a possible implementation of the first aspect, the second KQI includes QoS scores of all groups of pictures of the target service transmitted on the target channel; and the quality-of-service parameter is a QoS score that is of the target service and that is obtained based on the QoS scores of all the groups of pictures of the target service.

In this possible implementation, each video may include a plurality of groups of pictures (groups of pictures, GOP), and each GOP may include a plurality of video frames. In this way, a QoS score of the GOP may be determined based on QoS scores of all the video frames, and a QoS score of transmitting the video is further determined, so that the target service is managed based on the QoS score.

In a possible implementation of the first aspect, the foregoing step that the access network device manages, based on the KQI information and a target service quality-of-service requirement corresponding to the KQI information, the target service transmitted on the target channel includes: The access network device determines that the quality-of-service parameter does not satisfy a target service quality-of-service requirement corresponding to the quality-of-service parameter; and the access network device stops transmitting the target service on the target channel.

In this possible implementation, the QoS score of the target service transmitted on the target channel may be calculated based on some KQIs. In this way, whether the corresponding target service quality-of-service requirement is satisfied may be determined based on the QoS score. If the corresponding target service quality-of-service requirement is not satisfied, transmission of the target service on the target channel may be stopped. In this way, a waste of air interface resources caused by a user whose channel quality does not satisfy the target service quality-of-service requirement can be reduced, and the air interface resources are allocated to users whose channel quality satisfies the target service quality-of-service requirement. This can improve utilization of the air interface resources, and can further increase a capacity of users whose quality of service satisfies a requirement in a system. In addition, in the solution of this application, whether to admit a user to continue to use the target service is decided based on the KQI. The KQI can better reflect the quality of service of the target service. In comparison with a manner of determining the quality of service of the target service based on a KPI of a physical layer, the KQI-based manner is more accurate, and can avoid misjudgment of quality of service of a service of a user, thereby accurately screening out the user whose quality of service satisfies the requirement.

In a possible implementation of the first aspect, the foregoing step that the access network device manages, based on the KQI information and a target service quality-of-service requirement corresponding to the KQI information, the target service transmitted on the target channel includes: The access network device determines that the quality-of-service parameter satisfies a target service quality-of-service requirement corresponding to the quality-of-service parameter; and the access network device continues to transmit the target service on the target channel.

In this possible implementation, if the QoS score satisfies the target service quality-of-service requirement, it indicates that service quality of the transmission channel is good, and the target service may continue to be transmitted on the target channel, thereby ensuring smoothness of using the target service by the user.

In a possible implementation of the first aspect, the method further includes: The access network device sends a first message to a terminal device, where the first message includes information indicating a reason why the access network device stops transmitting the target service on the target channel, and the reason is that the quality of service of the target service during transmission of the target service on the target channel does not satisfy the target service quality-of-service requirement.

In this possible implementation, the access network device may notify, in a timely manner, the terminal device of the reason why transmission of the target service is stopped. After receiving the first message, the terminal device may learn, based on the first message, a reason why the terminal device cannot receive the target service, so as to perform corresponding processing. For example, a better network may be used in a timely manner to continue to use the target service or another service may be used, to avoid that the user is stuck in the target service, which affects user experience.

In a possible implementation of the first aspect, the foregoing step that an access network device determines key quality indicator KQI information of a target service during transmission of the target service on a target channel includes: The access network device determines the KQI information in a first time period in which the access network device starts to transmit the target service on the target channel.

In this possible implementation, the KQI information is determined in a period of time after the target service starts to be transmitted on the target channel. When quality of service of the target channel is poor, the transmission of the target service may be stopped in a timely manner, thereby reducing a waste of air interface resources.

A second aspect of this application provides a target service management method, including: receiving a first message from an access network device, where the first message includes information indicating a reason why the access network device stops transmitting a target service on a target channel, and the reason is that the quality of service of the target service during transmission of the target service on the target channel does not satisfy a target service quality-of-service requirement; and determining, based on the first message, the reason why transmission of the target service on the target channel is stopped.

In the second aspect, after receiving the first message, a terminal device may learn, based on the first message, a reason why the terminal device cannot receive the target service, so as to perform corresponding processing. For example, a better network may be used in a timely manner to continue to use the target service or another service may be used, to avoid that the user is stuck in the target service, which affects user experience.

A third aspect of this application provides a communication apparatus. The communication apparatus may be an access network device or a component that may be used for an access network device, and is configured to perform the method according to any one of the first aspect or the possible implementations of the first aspect. Specifically, the communication apparatus includes modules or units configured to perform the method according to any one of the first aspect or the possible implementations of the first aspect, for example, a first processing unit, a second processing unit, and a sending unit.

A fourth aspect of this application provides a communication apparatus. The communication apparatus may be a terminal device or a component that may be used for a terminal device, and is configured to perform the method according to the second aspect. Specifically, the terminal device includes modules or units configured to perform the method according to the second aspect, for example, a receiving unit and a processing unit.

A fifth aspect of this application provides an access network device, including a transceiver, a processor, and a memory. The transceiver and the processor are coupled to the memory. The memory is configured to store a program or instructions. The program or the instructions, when executed by the processor, enable the access network device to perform the method according to any one of the first aspect or the possible implementations of the first aspect.

A sixth aspect of this application provides a terminal device, including a transceiver, a processor, and a memory. The transceiver and the processor are coupled to the memory. The memory is configured to store a program or instructions. The program or the instructions, when executed by the processor, enable the terminal device to perform the method according to the second aspect.

A seventh aspect of this application provides a chip system. The chip system includes one or more interface circuits and one or more processors. The interface circuit is interconnected to the processor through a line. The interface circuit is configured to receive a signal from a memory of an access network device, and send the signal to the processor. The signal includes computer instructions stored in the memory. When the processor executes the computer instructions, the access network device performs the method according to any one of the first aspect or the possible implementations of the first aspect.

An eighth aspect of this application provides a chip system. The chip system includes one or more interface circuits and one or more processors. The interface circuit is interconnected to the processor through a line. The interface circuit is configured to receive a signal from a memory of a terminal device, and send the signal to the processor. The signal includes computer instructions stored in the memory. When the processor executes the computer instructions, the terminal device performs the method according to the second aspect.

A ninth aspect of this application provides a computer-readable storage medium. The computer-readable storage medium stores a computer program or instructions. The computer program or the instructions, when run on a computer, enable the computer to perform the method according to any one of the first aspect or the possible implementations of the first aspect.

A tenth aspect of this application provides a computer-readable storage medium. The computer-readable storage medium stores a computer program or instructions. The computer program or the instructions, when run on a computer, enable the computer to perform the method according to the second aspect.

An eleventh aspect of this application provides a computer program product. The computer program product includes computer program code. The computer program code, when executed on a computer, enables the computer to perform the method according to any one of the first aspect or the possible implementations of the first aspect.

A twelfth aspect of this application provides a computer program product. The computer program product includes computer program code. The computer program code, when executed on a computer, enables the computer to perform the method according to the second aspect.

A thirteenth aspect of this application provides a communication system. The communication system includes a terminal device and an access network device. The access network device is configured to perform the method according to any one of the first aspect or the possible implementations of the first aspect, and the terminal device is configured to perform the method according to the second aspect.

For technical effects brought by any one of the second aspect to the thirteenth aspect or the possible implementations of the second aspect to the thirteenth aspect, refer to the technical effects brought by the first aspect or different possible implementations of the first aspect. Details are not described herein again.

**BRIEF DESCRIPTION OF DRAWINGS**

FIG. 1 is a diagram of a structure of a communication system according to an embodiment of this application;

FIG. 2 is a diagram of a structure of an access network device according to an embodiment of this application;

FIG. 3 is a diagram of a structure of a terminal device according to an embodiment of this application;

FIG. 4 is a diagram of an embodiment of a target service management method according to an embodiment of this application;

FIG. 5 is a diagram of another embodiment of a target service management method according to an embodiment of this application;

FIG. 6 is a diagram of a simulation effect according to an embodiment of this application;

FIG. 7 is a diagram of another embodiment of a target service management method according to an embodiment of this application;

FIG. 8 is a diagram of another embodiment of a target service management method according to an embodiment of this application;

FIG. 9 is a diagram of a structure of a communication apparatus according to an embodiment of this application; and

FIG. 10 is a diagram of another structure of a communication apparatus according to an embodiment of this application.

## DESCRIPTION OF EMBODIMENTS

The following describes embodiments of this application with reference to the accompanying drawings. It is clearly that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one (piece) of the following" or a similar expression thereof means any combination of these items, including a singular (piece) or any combination of plural (pieces). For example, at least one item (piece) of a, b, or c may indicate a, b, c, a and b, a and c, b and c, or a, b, and c, where a, b, and c may be in a singular form or a plural form.

Embodiments of this application provide a target service management method, to manage a target service based on KQI information that reflects quality of service of the target service transmitted on the target channel, thereby improving effective utilization of an air interface resource in transmitting the target service. This application further provides a corresponding access network device, a computer-readable storage medium, a computer program product, and the like. Details are separately described below.

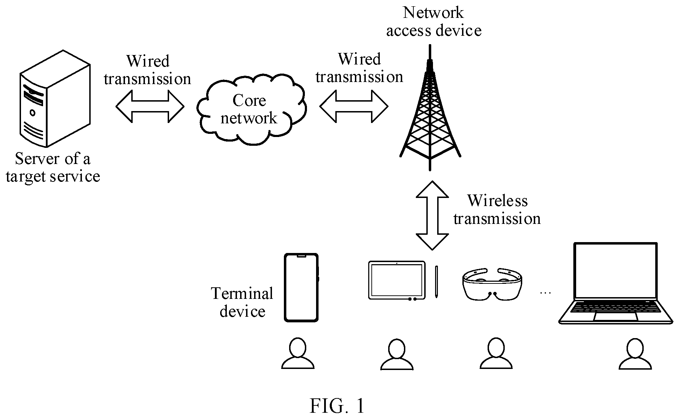

FIG. 1 is a diagram of a structure of a communication system according to an embodiment of this application.

As shown in FIG. 1, the communication system provided in this embodiment of this application includes a terminal device, an access network device, a server of a target service, and a core network. The terminal device performs wireless communication with the access network device. The access network device performs wired communication with the server of the target service via the core network.

The communication system in this embodiment of this application includes, but is not limited to, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a frequency division duplex long term evolution (frequency division duplex LTE, LTE-FDD) system, a time division duplex long term evolution (time division duplex LTE, LTE-TDD) system, a universal mobile telecommunications system (universal mobile telecommunications system, UMTS), another wireless communication system using an orthogonal frequency division multiplexing (orthogonal frequency division multiplexing, OFDM) technology, a worldwide interoperability for microwave access (worldwide interoperability for microwave access, WiMAX) communication system, a fifth generation (5th generation, 5G) new radio (new radio, NR) communication system, and any future sixth generation communication system or another communication system that can be applied.

In this embodiment of this application, the server of the target service may be a physical machine, or may be a virtual machine (virtual machine, VM) or a container (container). The target service may be any service that has a specific requirement on quality of service (quality of service, QoS). Typical application of the target service is a streaming media service that has a high requirement on real-time performance and reliability, for example, a voice call, a video call, video livestreaming, augmented reality (augmented reality, AR), virtual reality (virtual reality, VR), or tactile Internet.

The terminal device (which may also be referred to as user equipment (user equipment, UE)) is a device having a wireless transceiver function, and may be deployed on land, including indoor or outdoor, wearable, handheld, or vehicle-mounted devices; or may be deployed on water (for example, on a steamship); or may be deployed in the air (for example, on an airplane, a balloon, or a satellite). For example, the terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-riving), a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

In this embodiment of this application, the access network device may be a base station (base station, BS), may be a NodeB, may be an evolved node base station (evolved node base station, eNB), may be a base station (gNB), a transmission point (transmission point, TRP), or a Wi-Fi access point (access point, AP) in a 5G system which is also referred to as new radio (new radio, NR), or may be another device that has a similar base station function and that can perform air interface communication with a terminal device. An example in which the access network device is a base station is used for description.

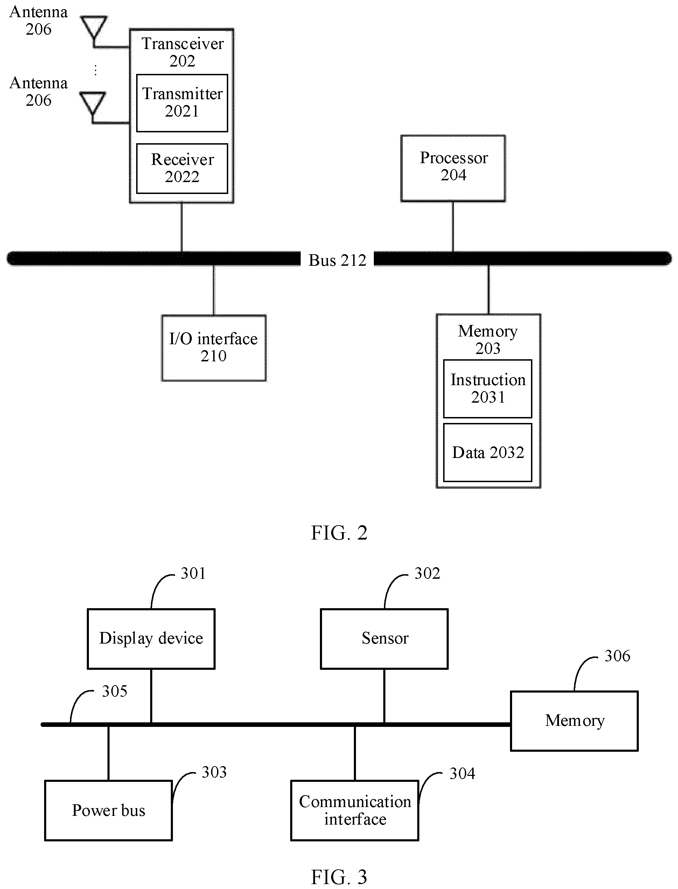

FIG. 2 is a diagram of a hardware structure of an access network device according to an embodiment of this application. As shown in FIG. 2, the access network device includes at least a transceiver 202, a memory 203, and a processor 204. The memory 203 is further configured to store instructions 2031 and data 2032. Optionally, the access network device may further include antennas 206, an (input/output, Input/Output, I/O) interface 210, and a bus 212. The transceiver 202 further includes a transmitter 2021 and a receiver 2022. In addition, the processor 204, the transceiver 202, the memory 203, and the I/O interface 210 are communicatively connected to each other via the bus 212, and the antennas 206 are connected to the transceiver 202.

The processor 204 may be a general-purpose processor, for example but not limited to, a central processing unit (Central Processing Unit, CPU), or may be a dedicated processor, for example but not limited to, a digital signal processor (Digital Signal Processor, DSP), an application-specific integrated circuit (Application-Specific Integrated Circuit, ASIC), or a field programmable gate array (Field Programmable Gate Array, FPGA). Alternatively, the processor 204 may be a neural network processing unit (neural processing unit, NPU). In addition, the processor 204 may alternatively be a combination of a plurality of processors. Particularly, in the technical solution provided in this embodiment of this application, the processor 204 may be configured to perform related steps in subsequent method embodiments.

The transceiver 202 includes the transmitter 2021 and the receiver 2022. In an optional implementation, the transmitter 2021 is configured to send a signal via the antenna 206. The receiver 2022 is configured to receive a signal via at least one of the antennas 206. In the technical solution provided in this embodiment of this application, the transmitter 2021 may be specifically configured to perform, for example, an operation of transmitting a target service by the access network device to a terminal device in a subsequent method embodiment, via at least one of the antennas 206.

The processor 204 may be configured to execute the instructions stored in the memory 203, to control the transceiver 202 to receive a message and/or send a message, to complete functions of the access network device in method embodiments of this application.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, or a register. The memory 203 is specifically configured to store the instructions 2031 and the data 2032. The processor 204 may read and execute the instructions 2031 stored in the memory 203, to perform the steps and/or the operations described in method embodiments of this application.

Optionally, the access network device may further include the I/O interface 210. The I/O interface 210 is configured to receive instructions and/or data from a peripheral device, and output instructions and/or data to the peripheral device.

A corresponding structure of the terminal device in embodiments of this application is described by using a VR device as an example. As shown in FIG. 3, the terminal device includes one or more display devices 301, a sensor 302, a power bus 303, and a communication interface 304.

The one or more display devices 301, the sensor 302, the power bus 303, and the communication interface 304 are connected via a bus 305.

Optionally, the terminal device in embodiments of this application may further include an auxiliary device. For example, the auxiliary device may include a remote control handle for human-machine interaction. The VR device may alternatively be used in cooperation with another terminal device, for example, used in cooperation with a mobile phone or a computer.

The display device 301 is configured to display a simulated video, and project the simulated video onto retinas of a user. The display device 301 may be a liquid crystal display (liquid crystal display, LCD) that uses an ultra-high resolution, a high refresh rate, and high response time, and cooperates with an optical imaging system to provide high-definition image quality and a smooth display effect.

The sensor 302 is configured to collect motion data and environmental status data of an observer, and is specifically configured to collect a motion status and a location of a head of the observer, for example, rotation data of the head of the observer. Specifically, the sensor may be an inertia measurement unit (inertial measurement unit, IMU) disposed in the VR device, and is an apparatus configured to measure a triaxial attitude angle (or an angular speed) and an acceleration.

The communication interface 304 may support the VR device in communicating with another device via a wireless network, a wired network, Bluetooth, or another communication manner. This is not limited herein. For example, the communication interface 304 is configured to access different wireless network systems (for example, an LTE network) to send and receive a radio signal, and may be a baseband chip integrated with a radio frequency chip.

The power bus 303 is configured to supply power to the VR device.

The VR device may further include a memory 306.

The following describes the target service management method provided in embodiments of this application. Content performed by the access network device in the method may be performed by the access network device, or may be performed by a component (for example, a processor, a chip, or a chip system) of the access network device. Content performed by the terminal device may be performed by the terminal device, or may be performed by a component (for example, a processor, a chip, or a chip system) of the terminal device.

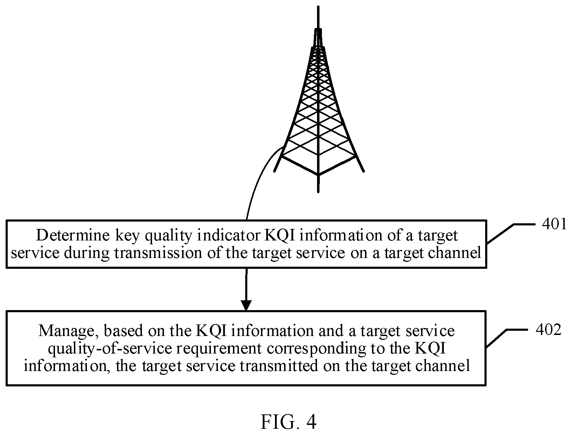

FIG. 4 is a diagram of an embodiment of a target service management method according to embodiments of this application.

As shown in FIG. 4, an embodiment of the target service management method provided in embodiments of this application includes the following steps.

401: An access network device determines key quality indicator (key quality indicator, KQI) information of a target service during transmission of the target service on a target channel.

In a possible implementation, the KQI information is used for reflecting quality of service of the target service during transmission of the target service on the target channel. A KQI is an indicator parameter of an intermediate layer between a physical layer and an application layer. The intermediate layer is closer to the application layer. Therefore, the indicator parameter KQI of the intermediate layer can better describe quality of service of the application layer.

In a possible implementation, the KQI information may include at least one KQI. The at least one KQI may directly reflect the quality of service of the target service during transmission of the target service on the target channel. In some other possible implementations, the KQI information may include a quality-of-service parameter calculated based on one or more KQIs. For example, the quality-of-service parameter may be a quality of service score, and the quality of service score reflects the quality of service of the target service during transmission of the target service on the target channel.

402: The access network device manages, based on the KQI information and a target service quality-of-service requirement corresponding to the KQI information, the target service transmitted on the target channel.

In this embodiment of this application, the target service quality-of-service requirement may be a threshold corresponding to the KQI information. Managing the target service transmitted on the target channel may include: managing whether to continue to transmit the target service on the target channel; and if the target service continues to be transmitted, continuing to schedule the target service to the target channel; or if the target service does not continue to be transmitted, stopping scheduling the target service to the target channel.

In this embodiment of this application, when managing the target service, the access network device references the key quality indicator KQI information of the target service during transmission of the target service on the target channel. The KQI information reflects the quality of service of the target service during transmission of the target service on the target channel. In this way, the access network device can manage the target service based on the quality of service of the target service during transmission of the target service on the target channel. This can improve effective utilization of an air interface resource of the access network device in transmitting the target service.

In this embodiment of this application, a management solution may be determined based on at least one KQI to manage the target service, or the management solution may be determined based on the quality-of-service parameter. The following separately describes the two manners.

1: Manage the target service based on the at least one KQI.

In embodiments of this application, the at least one KQI may include at least one of a frame reception rate FrmRate under a delay constraint, an average frame air interface transmission delay AvgTxDelay, a frame air interface transmission delay jitter StdTxDelay, and a frame arrival time jitter StdArrTime. Certainly, the KQI in this application may further include another transmission-related parameter. This may be specifically set based on a requirement.

To more quickly determine how to manage the target service, in a possible implementation of this embodiment of this application, types of the KQI may include a mandatory KQI and an optional KQI. When it is determined whether the KQI satisfies a requirement, the mandatory KQI may be preferentially determined, and after it is determined that the mandatory KQI satisfies the requirement, optional KQIs are determined one by one or the optional KQIs are determined in parallel. Alternatively, a manner of determining a plurality of KQIs may not be limited in this application, and may be determined in serial or in parallel.

The several types of KQIs listed above including the frame reception rate FrmRate under the delay constraint, the average frame air interface transmission delay AvgTxDelay, the frame air interface transmission delay jitter StdTxDelay, and the frame arrival time jitter StdArrTime are used as examples. The frame reception rate FrmRate under the delay constraint may be the mandatory KQI, and the average frame air interface transmission delay AvgTxDelay, the frame air interface transmission delay jitter StdTxDelay, and the frame arrival time jitter StdArrTime may be the optional KQIs. Certainly, the mandatory KQI and the optional KQI in embodiments of this application may alternatively be other performance indicators, which are not limited to the several types listed herein. In addition, a manner of classifying the mandatory KQI and the optional KQI is not limited in embodiments of this application.

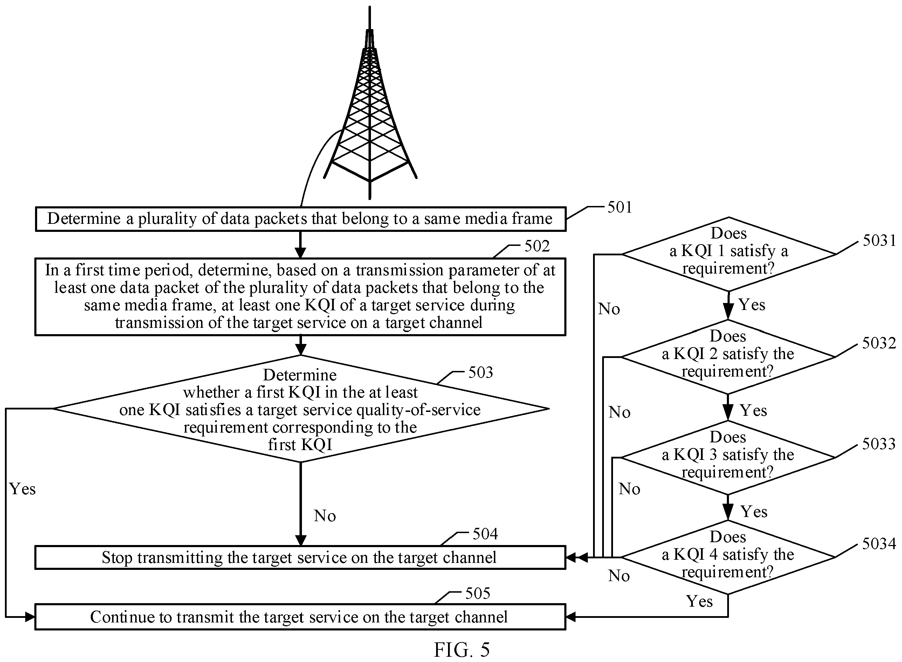

Based on the at least one KQI, as shown in FIG. 5, an embodiment of the target service management method provided in embodiments of this application may include the following steps.

501: The access network device determines a plurality of data packets that belong to a same media frame, where the media frame is a video frame or an audio frame.

In this embodiment of this application, solutions for determining a plurality of data packets that belong to a same media frame include, but are not limited to, the following two solutions.

1: Determine, based on a frame sequence number in a packet header of a data packet, the plurality of data packets that belong to the same media frame.

This solution may be understood with reference to the following Table 1.

**Table 1: Correspondence between frame sequence numbers and data packets**

| Frame sequence number | 1 | 1 | 1 | 1 | 2 | 2 | 2 | 2 |
|---|---|---|---|---|---|---|---|---|
| Data packet | Data packet 1-1 | Data packet 1-2 | ... | Data packet 1-M | Data packet 2-1 | Data packet 2-2 | ... | Data packet 2-N |

As shown in Table 1, a packet header of each data packet includes a frame sequence number of a media frame to which the data packet belongs. It can be learned from Table 1 that frame sequence numbers included in the data packet 1-1, the data packet 1-2, ..., and the data packet 1-M are all 1, so that it may be determined that the data packet 1-1, the data packet 1-2, ..., and the data packet 1-M belong to a same media frame 1. Frame sequence numbers included in the data packet 2-1, the data packet 2-2, ..., and the data packet 2-N are all 2, so that it may be determined that the data packet 2-1, the data packet 2-2, ..., and the data packet 2-N belong to a same media frame 2.

2: Determine, based on that sending or arrival of a media frame is usually in a form of a burst, the plurality of data packets that belong to the same media frame.

The access network device usually sends or receives a media frame in the form of a burst. For example, a media stream of 60 fps is sent or arrives at a burst every 16.67 ms. In this way, data packets in a same burst may be determined as data packets in a same media frame. Refer to Table 2.

**Table 2: Correspondence between bursts and data packets**

| Burst | 1 | 1 | 1 | 1 | 2 | 2 | 2 | 2 |
|---|---|---|---|---|---|---|---|---|
| Data packet | Data packet 1-1 | Data packet 1-2 | ... | Data packet 1-M | Data packet 2-1 | Data packet 2-2 | ... | Data packet 2-N |

As shown in Table 2, each data packet belongs to a burst. It can be learned from Table 2 that the data packet 1-1, the data packet 1-2, ..., and the data packet 1-M all belong to the burst 1, so that it may be determined that the data packet 1-1, the data packet 1-2, ..., and the data packet 1-M belong to a same media frame 1. The data packet 2-1, the data packet 2-2, ..., and the data packet 2-N all belong to the burst 2, so that it may be determined that the data packet 2-1, the data packet 2-2, ..., and the data packet 2-N belong to a same media frame 2.

It should be noted that, in embodiments of this application, determining, based on the burst, the media frame to which the data packet belongs does not conflict with determining, based on the frame sequence number, the media frame to which the data packet belongs. For example, if the media frame to which the data packet belongs cannot be determined based on the frame sequence number, the media frame to which the data packet belongs may be determined based on the burst; or if the media frame to which the data packet belongs cannot be determined based on the burst, the media frame to which the data packet belongs may be determined based on the frame sequence number.

It may be understood that the determining, based on the burst, the media frame to which the data packet belongs and the determining, based on the frame sequence number, the media frame to which the data packet belongs may be used separately or in combination.

502: In a first time period, the access network device determines, based on a transmission parameter of at least one data packet in the plurality of data packets that belong to the same media frame, at least one KQI of the target service during transmission of the target service on the target channel.

The first time period may be a period of time after the access network device starts to transmit the target service on the target channel. A length and a setting manner of the first time period are not limited in embodiments of this application.

In this application, the transmission parameter of the at least one data packet indicates time at which the at least one data packet is scheduled and/or time at which the at least one data packet arrives at a buffer. Content indicated by the transmission parameter of the at least one data packet herein is related to a specific KQI. For understanding, refer to the following descriptions of a KQI 1 to a KQI 4.

For a process of determining the KQI of the media frame based on the transmission parameter of the data packet, an example in which the KQI is a frame reception rate FrmRate under a delay constraint, an average frame air interface transmission delay AvgTxDelay, a frame air interface transmission delay jitter StdTxDelay, and a frame arrival time jitter StdArrTime may be used for understanding.

KQI 1: Frame reception rate under the delay constraint FrmRate.

In embodiments of this application, the target service is usually a strong-interaction VR/AR service, and has a high requirement on an air interface transmission delay. In a transmission process, some media frames arrive late at the access network device or the terminal device. These media frames that arrive late are discarded by the access network device or the terminal device, and are not counted into a quantity of media frames used for calculating FrmRate. It can be learned that FrmRate is related to an air interface transmission delay TxDelay of a media frame, and only a media frame that arrives at the access network device or the terminal device on time (to be specific, the air interface transmission delay is less than an air interface transmission delay threshold $T_{thr}$) is counted into the quantity of media frames used for calculating FrmRate.

The air interface transmission delay TxDelay of the media frame may be expressed as: TxDelay=$T_{end}$-$T_{begin}$. $T_{begin}$ is time at which a first data packet of the media frame is scheduled, and $T_{end}$ is time at which a last data packet of the media frame is scheduled.

A typical air interface transmission delay threshold of a strong-interaction VR service is usually $T_{thr}$=10 ms. A media frame whose air interface transmission delay exceeds the threshold is discarded by the access network device or the terminal device. In this way, in the first time period, a total quantity of frames sent by a server of the target service to the access network device is N, and a quantity of frames correctly received by the access network device is $N_1$. A quantity of correctly received frames during the frame air interface transmission delay TxDelay$\leq T_{thr}$ is $N_2$, so that the frame reception rate FrmRate under the delay constraint in the first time period is calculated as follows: FrmRate=$N_2$/N. It can be learned from the relational expression for calculating the FrmRate that, during determining of $N_2$, TxDelay of the media frame is first compared with $T_{thr}$, and the TxDelay of the media frame is calculated based on the time $T_{begin}$ at which the first data packet in the media frame is scheduled and the time $T_{end}$ at which the last data packet in the media frame is scheduled. It can be learned that, in this example, a transmission parameter of at least one data packet used for determining the KQI 1 is the time $T_{begin}$ at which the first data packet in the media frame is scheduled and the time $T_{end}$ at which the last data packet in the media frame is scheduled.

KQI 2: Average frame air interface transmission delay AvgTxDelay.

A transmission delay of an ith correctly received media frame is denoted as TxDelay;, so that the average frame air interface transmission delay is AvgTxDelay=mean($\{TxDelay_i\}$). mean() is a function for calculating a mean, and mean($\{TxDelay_i\}$) represents calculating a mean of transmission delays of all correctly received media frames in the first time period. For example, if X media frames are correctly received in the first time period, AvgTxDelay is an average frame air interface transmission delay of the X media frames. AvgTxDelay is related to TxDelay of the media frame. In can be learned from the descriptions in the foregoing KQI 1 part that TxDelay of the media frame is calculated based on the time

$T_{begin}$ at which the first data packet in the media frame is scheduled and the time $T_{end}$ at which the last data packet in the media frame is scheduled. It can be learned that, in this example, a transmission parameter of at least one data packet used for determining the KQI 2 is the time $T_{begin}$ at which the first data packet in the media frame is scheduled and the time $T_{end}$ at which the last data packet in the media frame is scheduled.

KQI 3: Frame air interface transmission delay jitter StdTxDelay.

A transmission delay of an $i^{th}$ correctly received frame is denoted as TxDelayi, so that the frame air interface transmission delay jitter is StdTxDelay=std({TxDelay$_i$}). std() is a function for calculating a standard deviation, and std({TxDelay$_i$}) represents calculating a standard deviation of transmission delays of all correctly received media frames in the first time period. For example, if X media frames are correctly received in the first time period, StdTxDelay is a frame air interface transmission delay jitter of the X media frames. StdTxDelay is related to TxDelay of the media frame. It can be learned from the descriptions in the foregoing KQI 1 part that TxDelay of the media frame is calculated based on the time $T_{begin}$ at which the first data packet in the media frame is scheduled and the time $T_{end}$ at which the last data packet in the media frame is scheduled. It can be learned that, in this example, a transmission parameter of at least one data packet used for determining the KQI 3 is the time $T_{begin}$ at which the first data packet in the media frame is scheduled and the time $T_{end}$ at which the last data packet in the media frame is scheduled.

KQI 4: Frame arrival time jitter StdArrTime.

Time at which the last data packet of an $i^{th}$ frame arrives at a buffer is denoted as ArrTimei, so that the frame arrival time jitter is StdArrTime=mean({ArrTime$_i$}). mean() is a function for calculating a mean, and mean({ArrTime$_i$}) represents calculating a mean of time last data packets of all correctly received media frames in the first time period arrive at the buffer. For example, if X media frames are correctly received in the first time period, StdArrTime is a mean of time at which the last data packets of the X media frames arrive at the buffer. Because the frame arrival time jitter of each media frame is the time at which the last data packet of the frame arrives at the buffer, which is ArrTimei, it can be learned that, in this example, a transmission parameter of at least one data packet used for determining the KQI 4 is the time at which the last data packet of the media frame arrives at the buffer.

503: The access network device determines whether a first KQI in the at least one KQI satisfies a target service quality-of-service requirement corresponding to the first KQI. If the condition is not satisfied, step 504 is performed; or if the condition is satisfied, step 505 is performed.

In embodiments of this application, each KQI may have a corresponding target service quality-of-service requirement. For example, the target service quality-of-service requirement of each KQI may be a corresponding threshold. For example, for the KQI 1, if a frame loss rate threshold is $FER_{thr}$, a threshold corresponding to the KQI 1 may be expressed as $(1-FER_{thr})$. A threshold corresponding to the KQI 2 may be represented as $TxDelay_{thr}$, a threshold corresponding to the KQI 3 may be represented as $StdTxDelay_{thr}$, and a threshold corresponding to the KQI 4 may be represented as $StdArrTime_{thr}$.

For a process of determining whether the first KQI in the at least one KQI satisfies the target service quality-of-service requirement corresponding to the first KQI, a process of serially determining the KQI 1 to the KQI 4 is used as an example for description. This process includes the following steps.

5031: Determine whether the KQI 1 satisfies a corresponding threshold requirement, and if the KQI 1 satisfies the corresponding threshold requirement, step 5032 is performed, or if the KQI 1 does not satisfy the corresponding threshold requirement, step 504 is performed.

The determined FrmRate is compared with $(1-FER_{thr})$. If FrmRate$\geq(1-FER_{thr})$, it indicates that the KQI 1 satisfies the requirement. If FrmRate$<(1-FER_{thr})$, it indicates that the KQI 1 does not satisfy the requirement.

5032: Determine whether the KQI 2 satisfies a corresponding threshold requirement, and if the KQI 2 satisfies the corresponding threshold requirement, step 5033 is performed, or if the KQI 2 does not satisfy the corresponding threshold requirement, step 504 is performed.

The determined AvgTxDelay is compared with $TxDelay_{thr}$. If AvgTxDelay$\leq TxDelay_{thr}$, it indicates that the KQI 2 satisfies the requirement. If AvgTxDelay$>TxDelay_{thr}$, it indicates that the KQI 2 does not satisfy the requirement.

5033: Determine whether the KQI 3 satisfies a corresponding threshold requirement, and if the KQI 3 satisfies the corresponding threshold requirement, step 5034 is performed, or if the KQI 3 does not satisfy the corresponding threshold requirement, step 504 is performed.

The determined StdTxDelay is compared with $StdTxDelay_{thr}$. If StdTxDelay$\leq StdTxDelay_{thr}$, it indicates that the KQI 3 satisfies the requirement. If StdTxDelay$>StdTxDelay_{thr}$, it indicates that the KQI 3 does not satisfy the requirement.

5034: Determine whether the KQI 4 satisfies a corresponding threshold requirement, and if the KQI 4 satisfies the corresponding threshold requirement, step 505 is performed, or if the KQI 4 does not satisfy the corresponding threshold requirement, step 504 is performed.

The determined StdArrTime is compared with $StdArrTime_{thr}$. If StdArrTime$\leq StdArrTime_{thr}$, it indicates that the KQI 4 satisfies the requirement. If StdArrTime$>StdArrTime_{thr}$, it indicates that the KQI 4 does not satisfy the requirement.

It may be understood that an execution sequence of 5031 to 5034 is not limited in embodiments of this application.

504: The access network device stops transmitting the target service on the target channel.

In other words, the access network device stops serving the target service on the target channel, or stops scheduling the target service to the target channel.

505: The access network device continues to transmit the target service on the target channel.

In embodiments of this application, each KQI may have a corresponding threshold. If a KQI does not satisfy a target service quality-of-service requirement corresponding to the KQI, transmission of the target service on the target channel may be stopped. In this way, a waste of air interface resources caused by a user whose channel quality does not satisfy the target service quality-of-service requirement can be reduced, and the air interface resources are allocated to users whose channel quality satisfies the target service quality-of-service requirement. This can improve utilization of the air interface resources, and can further increase a capacity of users whose quality of service satisfies a requirement in a system. If all the KQIs satisfy target service quality-of-service requirements respectively corresponding to the KQIs, it indicates that service quality of the transmission channel is good, and the target service may continue to be transmitted on the target channel, thereby ensuring smoothness of using the target service by the user. In addition, in the solution of this application, whether to admit a user to continue to use the target service is decided based on the KQI. The KQI can better reflect the quality of service of the target service. In comparison with a manner of determining the quality of service of the target service based on a KPI of a physical layer, the KQI-based manner is more accurate, and can avoid misjudgment of quality of service of a service of a user, thereby accurately screening out the user whose quality of service satisfies the requirement.

In the foregoing embodiment, in a period of time after a user accesses the target service, at least one KQI closely related to transmission of the target service may be used to perform user admission determining. When it is detected that a KQI does not satisfy a corresponding threshold requirement in the period of time, the user is stopped from continuing to access the target service. In this way, a user with poor channel quality can be prevented from wasting transmission resources, and resources are reserved for a user that is expected to satisfy a QoS requirement, thereby improving average QoS of the users and a user QoS satisfaction rate. The user QoS satisfaction rate refers to a proportion of users whose QoS satisfies a target service QoS requirement.

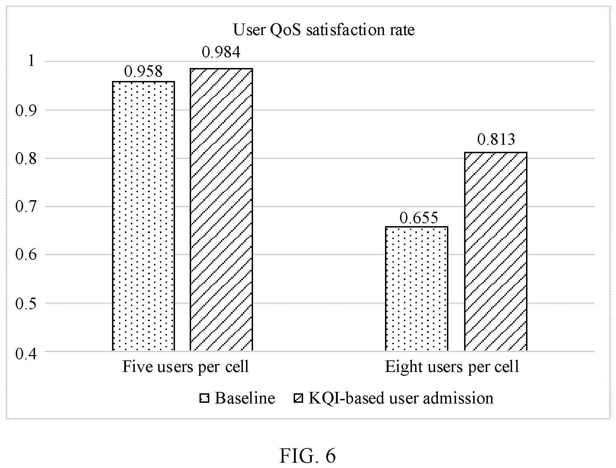

FIG. 6 shows a simulation result of KQI 1-based user admission. It can be learned that effectiveness of the KQI 1-based user admission is as follows: When there are five users per cell, the user QoS satisfaction rate increases from 95.8% to 98.4%; and when there are eight users per cell, the user QoS satisfaction rate increases from 65.5% to 81.3%.

2: Manage the target service based on the quality-of-service parameter.

In this embodiment of this application, the KQI information includes a quality-of-service parameter determined based on a second KQI. The quality-of-service parameter may be a quality of service score QoS_Index of the target service.

In this embodiment of this application, the second KQI may be the same as or different from the KQI 1 to the KQI 4 described above. In an example in which the second KQI is different from the first KQI, the second KQI in this embodiment of this application may be a parameter related to stuck.

As to stuck, in a video transmission process, for example, a length of a group of pictures (group of pictures, GOP) of a video is N frames, and a video includes M GOPs in total. The first frame of a GOP is an I frame, and other frames are P frames. For cloud VR, the most common reference relationship is adjacent-frame reference, to be specific, a current frame references a previous frame. It is assumed that the first frame loss position of the GOP is an $i^{th}$ frame. Due to inter-frame reference, decoding cannot be performed from the $i^{th}$ frame to the last frame of the GOP, resulting in stuck.

The second KQI includes a stuck ratio (stuck ratio, SR) and a stuck frequency (stuck frequency, SF) of a media stream. The SR is a ratio of a total of stuck duration of the media stream to duration of the media stream, and the SF is a ratio of a total of stuck times of the media stream to the duration of the media stream. Alternatively, the second KQI includes QoS scores of all groups of pictures of the target service transmitted on the target channel.

In this embodiment of this application, a relationship between QoS _Index and the second KQI satisfies the following formula:

$$QoS\_Index = f(KQI_1, KQI_2, ..., KQI_N).$$

$KQI_1$, $KQI_2$, ..., and $KQI_N$ represent the second KQI, for example, the stuck ratio SR and the stuck frequency SF, used for calculating QoS_Index.

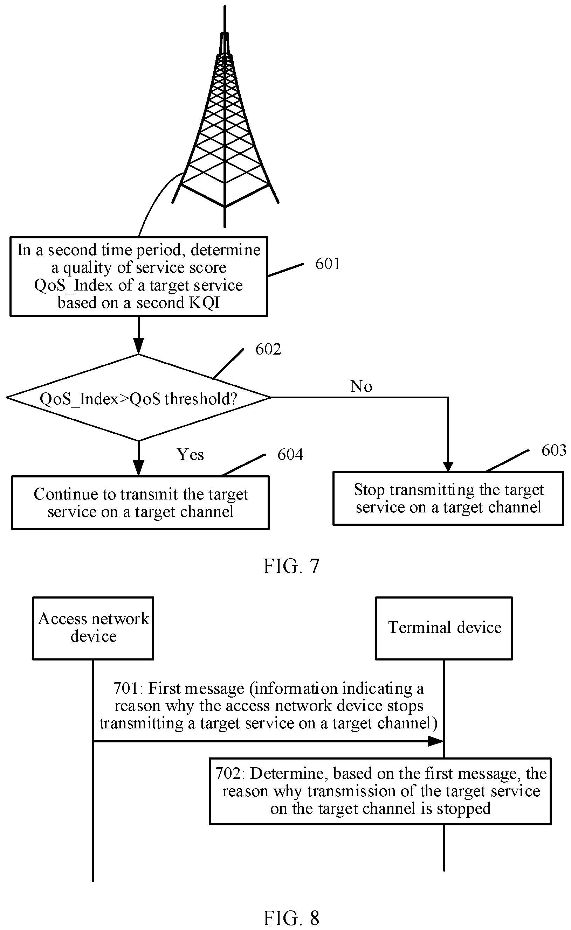

Based on the second KQI, as shown in FIG. 7, an embodiment of the target service management method provided in embodiments of this application may include the following steps.

601: In a second time period, the access network device determines a quality of service score QoS_Index of the target service based on the second KQI.

The second time period may be a period of time after the access network device starts to transmit the target service on the target channel. A length and a setting manner of the second time period are not limited in this embodiment of this application.

In addition, in this application, the length and the setting manner of the second time period may be the same as or different from the length and the setting manner of the first time period in the embodiment corresponding to FIG. 5. This is not limited in this application.

1: When the second KQI includes an SR and an SF, a relationship between QoS_Index and the SR and the SF may be expressed as follows:

$$QoS\_Index=1/(SR*SF).$$

In this way, after the SR and the SF are obtained, corresponding QoS_Index may be determined.

In this possible implementation, the SR and the SF are two parameters obtained in the second time period. The SR is a ratio of total stuck duration of a media stream to duration of the media stream. The duration of the media stream is usually equal to duration of the second time period.

2: When the second KQI includes QoS scores of all groups of pictures of the target service transmitted on the target channel, a relationship between QoS_Index and the QoS scores of the group of pictures may be expressed as follows:

$$QoS\_Index=\frac{1}{MN}\sum_{m=1}^{M}\sum_{n=1}^{N} score(m,n).$$

In the foregoing formula, $score(m, n)$ is a QoS score of an $n^{th}$ video frame of an $m^{th}$ GOP. If no frame is lost in a GOP, a score of each frame in the GOP is 100. If frame loss occurs in a GOP: If the first I frame is lost, a score of each frame in the GOP is 0. Otherwise, scores of subsequent frames decrease continuously from a frame loss position. Assuming that the first frame loss position of the $m^{th}$ GOP is an $(n_m)^{th}$ frame,

$$score(m,n) = 100/a^{n-n_m+1},\ 1 < n_m \le N.$$

$a$ is a positive constant greater than 1.

In this possible implementation, a group of pictures used for calculating QoS_Index is a group of pictures transmitted by the access network device in the second time period. If the access network device transmits m groups of pictures in the second time period, QoS scores of the m groups of pictures need to be used when QoS_Index is calculated.

To be specific, in an implementation, QoS scores of groups of pictures of a video may be determined based on QoS scores of video frames included in the groups of pictures of the video; and the QoS score of the target service transmitted on the target channel is determined based on the QoS scores of the groups of pictures of the video. The video of the target service transmitted on the target channel includes a plurality of groups of video pictures.

602. If QoS_Index is greater than a quality of service threshold, step 604 is performed; or if QoS_Index is less than the quality of service threshold, step 603 is performed.

In this embodiment of this application, that the quality-of-service parameter satisfies a target service quality-of-service requirement corresponding to the quality-of-service parameter may be represented as: QoS_Index>quality of service threshold. That the quality-of-service parameter does not satisfy the target service quality-of-service requirement corresponding to the quality-of-service parameter may be represented as: QoS_Index>quality of service threshold. When QoS_Index is equal to the quality of service threshold, step 604 may be performed, or step 603 may be performed. A step that is specifically performed may be determined based on preconfiguration. If QoS_Index≥quality of service threshold is preconfigured to indicate that the quality-of-service requirement is satisfied, step 604 is performed when QoS_Index is equal to the quality of service threshold; or if QoS_Index>quality of service threshold is preconfigured to indicate that the quality-of-service requirement is satisfied, step 603 is performed when QoS_Index is equal to the quality of service threshold.

603: The access network device stops transmitting the target service on the target channel.

604: The access network device continues to transmit the target service on the target channel.

In embodiments of this application, the QoS score of the target service transmitted on the target channel may be calculated based on some KQIs. In this way, whether the corresponding target service quality-of-service requirement is satisfied may be determined based on the QoS score. If the corresponding target service quality-of-service requirement is not satisfied, transmission of the target service on the target channel may be stopped. In this way, a waste of air interface resources caused by a user whose channel quality does not satisfy the target service quality-of-service requirement can be reduced, and the air interface resources are allocated to users whose channel quality satisfies the target service quality-of-service requirement. This can improve utilization of the air interface resources, and can further increase a capacity of users whose quality of service satisfies a requirement in a system. If the QoS score satisfies the target service quality-of-service requirement, it indicates that service quality of the transmission channel is good, and the target service may continue to be transmitted on the target channel, thereby ensuring smoothness of using the target service by the user. In addition, in the solution of this application, whether to admit a user to continue to use the target service is decided based on the KQI. The KQI can better reflect the quality of service of the target service. In comparison with a manner of determining the quality of service of the target service based on a KPI of a physical layer, the KQI-based manner is more accurate, and can avoid misjudgment of quality of service of a service of a user, thereby accurately screening out the user whose quality of service satisfies the requirement.

In the foregoing embodiment, in a period of time after the user accesses the target service, the QoS score of the target service transmitted on the target channel may be calculated based on some KQIs to perform user admission determining. When it is detected that the QoS score of the target service does not satisfy a corresponding quality-of-service requirement in the period of time, the user is stopped from continuing to access the target service. In this way, a user with poor channel quality can be prevented from wasting transmission resources, and resources are reserved for a user that is expected to satisfy a QoS requirement, thereby improving average QoS of the user and a user QoS satisfaction rate.

In this embodiment of this application, the target service is managed based on QoS_Index, so that effect similar to what is described in the foregoing embodiments: improving average QoS of the user and a user QoS satisfaction rate can be achieved.

After the access network device stops transmitting the target service on the target channel, as shown in FIG. 8, the method provided in embodiments of this application further includes the following steps.

701. The access network device sends a first message to a terminal device, and correspondingly the terminal device receives the first message from the access network device.

The first message includes information indicating a reason why the access network device stops transmitting the target service on the target channel. For example, the reason may be that the quality of service of the target service during transmission of the target service on the target channel does not satisfy the target service quality-of-service requirement.

702. The terminal device determines, based on the first message, the reason why transmission of the target service on the target channel is stopped.

In this embodiment of this application, the access network device may notify, in a timely manner, the terminal device of the reason why transmission of the target service is stopped. After receiving the first message, the terminal device may learn, based on the first message, a reason why the terminal device cannot receive the target service, so as to perform corresponding processing. For example, a better network may be used in a timely manner to continue to use the target service or another service may be used, to avoid that the user is stuck in the target service, which affects user experience.

The solution shown in FIG. 8 may be combined with any one of the foregoing embodiments shown in FIG. 4 to FIG. 7, or may be independently implemented.

The foregoing describes the target service management method, and the following describes a corresponding communication apparatus.

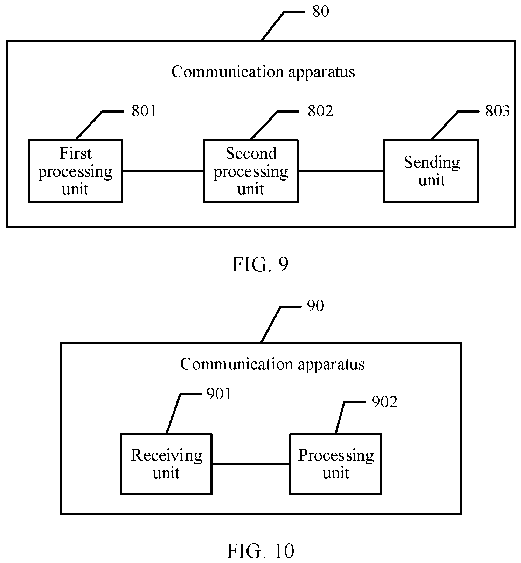

FIG. 9 is a diagram of a structure of a communication apparatus 80 according to an embodiment of this application. The communication apparatus may be the access network device in the method embodiments in FIG. 4 to FIG. 8. An embodiment of the communication apparatus 80 includes:

a first processing unit 801, configured to determine key quality indicator KQI information of a target service during transmission of the target service on a target channel, where the KQI information is used for reflecting quality of service of the target service during transmission of the target service on the target channel, and the first processing unit 801 may perform step 401 in the foregoing method embodiment; and

a second processing unit 802, configured to manage, based on the KQI information determined by the first processing unit 801 and a target service quality-of-service requirement corresponding to the KQI information, the target service transmitted on the target channel. The second processing unit 802 may perform step 402 in the foregoing method embodiment.

In this embodiment of this application, when managing the target service, the communication apparatus references the key quality indicator KQI information of the target service during transmission of the target service on the target channel. The KQI information reflects the quality of service of the target service during transmission of the target service on the target channel. In this way, the communication apparatus can manage the target service based on the quality of service of the target service during transmission of the target service on the target channel. This can improve effective utilization of an air interface resource of the access network device in transmitting the target service.

Optionally, the KQI information includes at least one KQI.

Optionally, the at least one KQI includes at least one of a frame reception rate under a delay constraint, an average frame air interface transmission delay, a frame air interface transmission delay jitter, and a frame arrival time jitter.

Optionally, the first processing unit 801 is specifically configured to: determine a plurality of data packets that belong to a same media frame, where the media frame is a video frame or an audio frame; and determine, based on a transmission parameter of at least one data packet in the plurality of data packets that belong to the same media frame, at least one KQI of the target service during transmission of the target service on the target channel, where the transmission parameter of the at least one data packet indicates time at which the at least one data packet is scheduled and/or time at which the at least one data packet arrives at a buffer.

Optionally, the plurality of data packets that belong to the same media frame have a same frame sequence number.

Optionally, the plurality of data packets that belong to the same media frame are from a same burst.

Optionally, the second processing unit 802 is specifically configured to determine that a first KQI in the at least one KQI does not satisfy a target service quality-of-service requirement corresponding to the first KQI, and stop transmitting the target service on the target channel.

Optionally, the second processing unit 802 is specifically configured to: determine that each KQI in the at least one KQI satisfies a corresponding target service quality-of-service requirement; and continue to transmit the target service on the target channel.

Optionally, the KQI information includes a quality-of-service parameter determined based on a second KQI.

Optionally, the second KQI includes a stuck ratio SR and a stuck frequency SF of a media stream. The SR is a ratio of a total of stuck duration of the media stream to duration of the media stream, and the SF is a ratio of a total of stuck times of the media stream to the duration of the media stream; and the quality-of-service parameter is a quality of service QoS score obtained based on the SR and the SF.

Optionally, the second KQI includes QoS scores of all groups of pictures of the target service transmitted on the target channel; and the quality-of-service parameter is a QoS score that is of the target service and that is obtained based on the QoS scores of all the groups of pictures of the target service.

Optionally, the second processing unit 802 is specifically configured to: determine that the quality-of-service parameter does not satisfy a target service quality-of-service requirement corresponding to the quality-of-service parameter; and stop transmitting the target service on the target channel.

Optionally, the second processing unit 802 is specifically configured to: determine that the quality-of-service parameter satisfies a target service quality-of-service requirement corresponding to the quality-of-service parameter; and continue to transmit the target service on the target channel.

Optionally, the communication apparatus further includes a sending unit 803. The sending unit 803 is configured to send a first message to a terminal device, where the first message includes information indicating a reason why the access network device stops transmitting the target service on the target channel, and the reason is that the quality of service of the target service during transmission of the target service on the target channel does not satisfy the target service quality-of-service requirement.

Optionally, the first processing unit 801 is specifically configured to determine the KQI information in a first time period in which the first processing unit 801 starts to transmit the target service on the target channel.

For example, the first processing unit 801 and the second processing unit 802 may be implemented by using at least one processing module, and the sending unit 803 may be implemented by using a transceiver module. Optionally, the communication apparatus may further include a storage module, configured to store information such as a program, instructions, or data. The information in the storage module may be read by the processing module or the transceiver module.

For example, the first processing unit 801 and the second processing unit 802 may be implemented by using at least one processor, and the sending unit 803 may be implemented by using a transceiver. Optionally, the communication apparatus may further include a storage unit, configured to store information such as a program, instructions, or data. The information in the storage unit may be read by the processing unit or a receiving unit.

FIG. 10 is a diagram of a structure of a communication apparatus 90 according to an embodiment of this application. The communication apparatus may be the terminal device in the method embodiments in FIG. 4 to FIG. 8. An embodiment of the communication apparatus 90 includes:

a receiving unit 901, configured to receive a first message from an access network device, where the first message includes information indicating a reason why the access network device stops transmitting a target service on a target channel, and the reason is that quality of service of the target service during transmission of the target service on the target channel does not satisfy a target service quality-of-service requirement; and
a processing unit 902, configured to determine, based on the first message received by the receiving unit 901, the reason why transmission of the target service on the target channel is stopped.

In this embodiment of this application, after receiving the first message, the communication apparatus may learn, based on the first message, the reason why the communication apparatus cannot receive the target service, so as to perform corresponding processing. For example, a better network may be used in a timely manner to continue to use the target service or another service may be used, to avoid that the user is stuck in the target service, which affects user experience.

For example, the processing unit 902 may be implemented by using at least one processing module, and the receiving unit 901 may be implemented by using a transceiver module. Optionally, the communication apparatus may further include a storage module, configured to store information such as a program, instructions, or data. The information in the storage module may be read by the processing module or the transceiver module.

For example, the processing unit 902 may be implemented by using at least one processor, and the receiving unit 901 may be implemented by using a transceiver. Optionally, the terminal device may further include a storage unit, configured to store information such as a program, instructions, or data. The information in the storage unit may be read by the processing unit or the receiving unit.

It should be noted that content such as information exchange and an execution process between modules/or components in the access network device is based on the same concept as the method embodiments corresponding to FIG. 4 to FIG. 8 in this application, and content such as information exchange and an execution process between modules/or components in the terminal device is based on the same concept as the method embodiment corresponding to FIG. 8 in this application. For specific content, refer to the descriptions in the method embodiments described above in this application. Details are not described herein again.

It should be noted that, for a specific implementation of the access network device and beneficial effects brought by the access network device, refer to the descriptions in the method embodiments corresponding to FIG. 4 to FIG. 8. Details are not described herein again.

An embodiment of this application further provides an access network device. The access network device includes a transceiver, a processor, and a memory. The transceiver and the processor are coupled to the memory. The memory is configured to store a program, instructions, or data. The program or the instructions, when executed by the processor, enable the access network device to perform the target service management method described in any one of the method embodiments in FIG. 4 to FIG. 8.

An embodiment of this application further provides a terminal device, including a transceiver, a processor, and a memory. The transceiver and the processor are coupled to the memory. The memory is configured to store a program or instructions. The program or the instructions, when executed by the processor, enable the terminal device to perform the target service management method described in FIG. 8.

An embodiment of this application further provides a chip system. The chip system includes one or more interface circuits and one or more processors. The interface circuit is interconnected to the processor through a line. The interface circuit is configured to receive a signal from a memory of an access network device, and send the signal to the processor. The signal includes computer instructions stored in the memory. When the processor executes the computer instructions, the access network device performs the target service management method described in any one of the method embodiments in FIG. 4 to FIG. 8, or the terminal device performs the target service management method described in FIG. 8.

It should be understood that the processor in the chip system may be implemented by using hardware or software. When implemented by using hardware, the processor may be a logic circuit, an integrated circuit, or the like. When implemented by using software, the processor may be a general-purpose processor implemented by reading software code stored in the memory. The memory may be integrated into the processor, or may be located outside the processor and exist independently.

The "implemented by using hardware" means that a function of the foregoing module or unit is implemented by using a hardware processing circuit that does not have a program instruction processing function. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit configured to implement an FPGA function and a CPU may be formed on a silicon base, and are independently packaged into a chip, where the chip is also referred to as a SoPC (system-on-a-programmable-chip, system-on-a-programmable-chip).

This application further provides a communication system, including a terminal device and the access network device described above.

An embodiment of this application further provides a computer-readable storage medium, including instructions. The instructions, when run on a computer, enable the computer to perform any implementation shown in any one of the method embodiments in FIG. 4 to FIG. 8.

An embodiment of this application further provides a computer program product. The computer program product includes computer program code. The computer program code, when run on a computer, enables the computer to perform any implementation described in the foregoing method embodiments in FIG. 4 to FIG. 8.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in embodiments of this application.

All or some of the foregoing embodiments may be implemented by using software, hardware, firmware, or any combination thereof. When software is used to implement embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A target service management method, comprising:

    determining, by an access network device, key quality indicator KQI information of a target service during transmission of the target service on a target channel, wherein the KQI information is used for reflecting quality of service of the target service during transmission of the target service on the target channel; and
    managing, by the access network device based on the KQI information and a target service quality-of-service requirement corresponding to the KQI information, the target service transmitted on the target channel.

2. The method according to claim 1, wherein the KQI information comprises at least one KQI.

3. The method according to claim 2, wherein the at least one KQI comprises at least one of a frame reception rate under a delay constraint, an average frame air interface transmission delay, a frame air interface transmission delay jitter, and a frame arrival time jitter.

4. The method according to any one of claims 2 to 4, wherein the determining, by an access network device, KQI information of a target service during transmission of the target service on a target channel comprises:

determining, by the access network device, a plurality of data packets that belong to a same media frame, wherein the media frame is a video frame or an audio frame; and

determining, by the access network device based on a transmission parameter of at least one data packet in the plurality of data packets that belong to the same media frame, at least one KQI of the target service during transmission of the target service on the target channel, wherein the transmission parameter of the at least one data packet indicates time at which the at least one data packet is scheduled and/or time at which the at least one data packet arrives at a buffer.

5. The method according to claim 4, wherein the plurality of data packets that belong to the same media frame have a same frame sequence number.

6. The method according to claim 4 or 5, wherein the plurality of data packets that belong to the same media frame are from a same burst.

7. The method according to any one of claims 2 to 6, wherein the managing, by the access network device based on the KQI information and a target service quality-of-service requirement corresponding to the KQI information, the target service transmitted on the target channel comprises:

determining, by the access network device, that a first KQI in the at least one KQI does not satisfy a target service quality-of-service requirement corresponding to the first KQI; and

stopping, by the access network device, transmitting the target service on the target channel.

8. The method according to any one of claims 2 to 6, wherein the managing, by the access network device based on the KQI information and a target service quality-of-service requirement corresponding to the KQI information, the target service transmitted on the target channel comprises:

determining, by the access network device, that each KQI in the at least one KQI satisfies a corresponding target service quality-of-service requirement; and

continuing, by the access network device, to transmit the target service on the target channel.

9. The method according to claim 1, wherein the KQI information comprises a quality-of-service parameter determined based on a second KQI.

10. The method according to claim 9, wherein the second KQI comprises a stuck ratio SR and a stuck frequency SF of a media stream, the SR is a ratio of a total of stuck duration of the media stream to duration of the media stream, and the SF is a ratio of a total of stuck times of the media stream to the duration of the media stream; and

the quality-of-service parameter is a quality of service QoS score obtained based on the SR and the SF.

11. The method according to claim 9, wherein the second KQI comprises QoS scores of all groups of pictures of the target service transmitted on the target channel; and

the quality-of-service parameter is a QoS score that is of the target service and that is obtained based on the QoS scores of all the groups of pictures of the target service.

12. The method according to any one of claims 9 to 11, wherein the managing, by the access network device based on the KQI information and a target service quality-of-service requirement corresponding to the KQI information, the target service transmitted on the target channel comprises:

determining, by the access network device, that the quality-of-service parameter does not satisfy a target service quality-of-service requirement corresponding to the quality-of-service parameter; and

stopping, by the access network device, transmitting the target service on the target channel.

13. The method according to any one of claims 9 to 11, wherein the managing, by the access network device based on the KQI information and a target service quality-of-service requirement corresponding to the KQI information, the target service transmitted on the target channel comprises:

determining, by the access network device, that the quality-of-service parameter satisfies a target service quality-of-service requirement corresponding to the quality-of-service parameter; and

continuing, by the access network device, to transmit the target service on the target channel.

**14.** The method according to claim 7 or 12, wherein the method further comprises:
sending, by the access network device, a first message to a terminal device, wherein the first message comprises information indicating a reason why the access network device stops transmitting the target service on the target channel, and the reason is that the quality of service of the target service during transmission of the target service on the target channel does not satisfy the target service quality-of-service requirement.

**15.** The method according to any one of claims 1 to 14, wherein the determining, by an access network device, key quality indicator KQI information of a target service during transmission of the target service on a target channel comprises:
determining, by the access network device, the KQI information in a first time period in which the access network device starts to transmit the target service on the target channel.

**16.** A target service management method, comprising:

receiving a first message from an access network device, wherein the first message comprises information indicating a reason why the access network device stops transmitting a target service on a target channel, and the reason is that quality of service of the target service during transmission of the target service on the target channel does not satisfy a target service quality-of-service requirement; and
determining, based on the first message, the reason why transmission of the target service on the target channel is stopped.

**17.** A communication apparatus, wherein the communication apparatus comprises at least one module configured to implement the method according to any one of claims 1 to 15.

**18.** A communication apparatus, wherein the communication apparatus comprises at least one module configured to implement the method according to claim 16.

**19.** An access network device, comprising a transceiver, a processor, and a memory, wherein the transceiver and the processor are coupled to the memory, the memory is configured to store a program or instructions, and the program or the instructions, when executed by the processor, enable the access network device to perform the method according to any one of claims 1 to 15.

**20.** A terminal device, comprising a transceiver, a processor, and a memory, wherein the transceiver and the processor are coupled to the memory, the memory is configured to store a program or instructions, and the program or the instructions, when executed by the processor, enable the terminal device to perform the method according to claim 16.

**21.** A computer-readable storage medium, wherein the computer-readable storage medium stores instructions, and the instructions, when run on an access network device, enable the access network device to perform the method according to any one of claims 1 to 16.

**22.** A computer program product, wherein the computer program product comprises computer program code, and the computer program code, when run on a computer, enables the computer to perform the method according to any one of claims 1 to 16.

**23.** A chip system, wherein the chip system comprises one or more interface circuits and one or more processors; the interface circuit is interconnected to the processor through a line; the interface circuit is configured to receive a signal from a memory of an access network device, and send the signal to the processor, wherein the signal comprises computer instructions stored in the memory; and when the processor executes the computer instructions, the access network device performs the method according to any one of claims 1 to 16.

**24.** A communication system, comprising a terminal device and an access network device, wherein the access network device is configured to perform the method according to any one of claims 1 to 15, and the terminal device is configured to perform the method according to claim 16.

FIG. 1

Antenna
206

Antenna
206

Transceiver
202

Transmitter
2021

Receiver
2022

Processor
204

Bus 212

I/O interface
210

Memory
203

Instruction
2031

Data 2032

FIG. 2

301

Display device

302

Sensor

306

Memory

305

303

Power bus

304

Communication
interface

FIG. 3

Determine key quality indicator KQI information of a target service during transmission of the target service on a target channel — 401

Manage, based on the KQI information and a target service quality-of-service requirement corresponding to the KQI information, the target service transmitted on the target channel — 402

FIG. 4

FIG. 5

FIG. 6

In a second time period, determine a quality of service score QoS_Index of a target service based on a second KQI — 601

QoS_Index>QoS threshold? — 602

No

Yes — 604

Stop transmitting the target service on a target channel — 603

Continue to transmit the target service on a target channel

FIG. 7

Access network device

Terminal device

701: First message (information indicating a reason why the access network device stops transmitting a target service on a target channel)

702: Determine, based on the first message, the reason why transmission of the target service on the target channel is stopped

FIG. 8

80

Communication apparatus

801

802

803

First processing unit

Second processing unit

Sending unit

FIG. 9

90

Communication apparatus

901

902

Receiving unit

Processing unit

FIG. 10

| | INTERNATIONAL SEARCH REPORT | International application No. |
|---|---|---|
| | | **PCT/CN2023/090230** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 不达标, 不合格, 不满足, 不符合, 抖动, 多媒体, 服务质量, 关键质量指标, 时延, 视频, 停止, 延时, 业务, 音频, 直播, 暂停, 质量, 中止, 终止, service, quality, QoS, multimedia, video, audio, key quality indicator, KQI, live broadcast, stop, pause, not, satisfy, jitter, delay

**C. DOCUMENTS CONSIDERED TO BE RELEVANT**

| Category* | Citation of document, with indication, where appropriate, of the relevant passages | Relevant to claim No. |
|---|---|---|
| A | CN 110198304 A (VISIONVERA INFORMATION TECHNOLOGY CO., LTD.) 03 September 2019 (2019-09-03) entire document | 1-24 |
| A | CN 109861962 A (XUZHOU LIXUN INFORMATION TECHNOLOGY CO., LTD.) 07 June 2019 (2019-06-07) entire document | 1-24 |
| A | CN 114079975 A (HUAWEI TECHNOLOGIES CO., LTD.) 22 February 2022 (2022-02-22) entire document | 1-24 |
| A | WO 2012025670 A1 (NOKIA CORP. et al.) 01 March 2012 (2012-03-01) entire document | 1-24 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **24 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/090230**

| Patent document cited in search report | | | Publication date (day/month/year) | Patent family member(s) | | | Publication date (day/month/year) |
|---|---|---|---|---|---|---|---|
| CN | 110198304 | A | 03 September 2019 | None | | | |
| CN | 109861962 | A | 07 June 2019 | None | | | |
| CN | 114079975 | A | 22 February 2022 | None | | | |
| WO | 2012025670 | A1 | 01 March 2012 | EP | 2609788 | A1 | 03 July 2013 |
| | | | | US | 2014010209 | A1 | 09 January 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210467500